# EUROPÄISCHE PATENTSCHRIFT

(11) **EP 3 032 331 B1**
(45) Veröffentlichungstag und Bekanntmachung des Hinweises auf die Patenterteilung: **26.08.2020**
(21) Anmeldenummer: 15192322.4
(22) Anmeldetag: 30.10.2015
(51) Int. Cl.: G03B 37/00, F16L 55/26, E03F 7/12, E03F 9/00, B08B 9/04, F16L 101/30, B08B 9/043, F16L 55/18, F16L 55/40

(54) **ABLENKEINRICHTUNG**
DEFLECTING DEVICE
DISPOSITIF DE DÉVIATION

(30) Priorität: 11.12.2014 DE 202014105995 U
(43) Veröffentlichungstag der Anmeldung: 15.06.2016
(73) Patentinhaber: iPEK International GmbH, 87477 Sulzberg (DE)
(72) Erfinder: Pomp, Dominik, 87447 Waltenhofen (DE); Kiesel, Marvin, 87499 Wildpoldsried (DE)
(74) Vertreter: 2s-ip Schramm Schneider Bertagnoll Patent- und Rechtsanwälte Part mbB

(56) Entgegenhaltungen:
- EP-A1- 1 450 095
- DE-U1-202011 004 982
- DE-U1-202014 105 354

## Beschreibung

Die Erfindung betrifft eine Ablenkeinrichtung zum Ablenken eines Arbeitsmittels eines Inspektions- und/oder Wartungssystems, sowie ein Inspektions- und/oder Wartungssystem mit einer erfindungsgemäßen Ablenkeinrichtung.

### Hintergrund der Erfindung und Stand der Technik

Zur Durchführung von Rohr- bzw. Kanalinspektionen oder Kanalreinigungs- bzw. Wartungsarbeiten ist es bekannt, sogenannte Kanalinspektions- und/oder Wartungssysteme zu verwenden, die in das zu inspizierende bzw. zu wartende Rohr bzw. Kanalrohr eingebracht werden können und im Kanalrohr bewegt, etwa verfahren oder vorgeschoben werden können. Ein Hausanschlusskanal ist in der Regel ein stark verzweigtes Rohrnetz, das in einen Hauptkanal mündet, in dem die Kanalinspektions- und/oder Wartungssysteme eingeführt werden.

Die Inspektions- bzw. Wartungssysteme müssen hierbei so ausgestaltet sein, dass diese von dem Hauptkanal aus in einen Nebenkanal abzweigen können, um auch den Nebenkanal inspizieren bzw. warten zu können.

Bekannte Inspektions- bzw. Reinigungssysteme verwenden hierzu Leit- und/oder Abdrückvorrichtungen, die über die Kontur des vorderen Endes des Inspektions- bzw. Wartungssystems hinausragen und relativ zum Inspektions- bzw. Wartungssystem verschwenkt werden können.

Ein derartiges System ist beispielsweise aus der DE 203 17 314 U1 bekannt. An dem vorderen Ende des Inspektionssystems ist hier eine Kameraeinheit angeordnet, die um eine in Vorschubrichtung verlaufende Achse drehbar ist, wobei an einem Drehmechanismus ein Lenkstäbchen befestigt ist. Beim Anfahren eines Seitenkanals wird der Drehmechanismus so gedreht, dass das Lenkstäbchen zumindest teilweise in den Seitenkanal hineinragt, sodass sich das Lenkstäbchen bei einem weiteren Vorschub des Inspektionssystems an der Seitenwand des Seitenkanals abstützt und somit ein Abbiegen des Inspektionssystems in den Seitenkanal hinein bewirkt.

Aus der DE 101 02 056 A1 ist eine Satellitenkamera eines Rohrinspektionssystems bekannt, an der eine Leitvorrichtung angeordnet ist, die zur Umlenkung der Satellitenkamera vorgesehen ist. Die Leitvorrichtung ist als eine über den Außenumriss der Satellitenkamera hinaus verfahrbare Abdrückvorrichtung ausgebildet.

Derartige Systeme haben allerdings den Nachteil, dass die über die Kamerakontur hinausragende Leit- bzw. Lenkvorrichtung im Blickwinkel des Kamerabildes liegen können und dadurch die Inspektion negativ beeinflussen können. Zudem können diese Leit- bzw. Lenkvorrichtungen die Beweglichkeit, beispielsweise eines Kamerakopfes negativ beeinflussen.

Sofern anstelle eines Kamerakopfes ein Werkzeug, etwa ein Fräswerkzeug, vorgesehen ist, kann die Leitvorrichtung sogar verhindern, dass das Werkzeug an die zu bearbeitende Stelle gelangen kann, wenn nicht entsprechende Mittel vorgesehen sind, mit denen der Lenkstab eingefahren oder weggeklappt werden kann.

Aus der EP 1 450 095 A1 ist ein biegbarer Korpus bekannt, der ein Kopfstück und ein Endstück aufweist. Zwischen dem Kopfstück und dem Endstück sind drei Zugelemente eingespannt. Mit den drei Zugelementen kann ein Vollkreis geschlagen werden, ohne den Korpus selbst drehen zu müssen.

Aus der DE 20 2014 105 354 U1 ist eine Vorrichtung zum Reinigen von Rohren bekannt, die eine Schwenkeinrichtung aufweist, mit der eine Düse ausgelenkt werden kann.

Aus der DE 20 2011 004 982 U1 ist eine Vorrichtung zur Seitablenkung einer Kamera bekannt. An der Kamera ist eine Zugseele befestigt. Mit einem Rotor kann die Kamera gedreht werden, sodass sich auch der Ankerpunkt der Zugseele entsprechend dreht. Durch Ziehen an der Zugseele kann die Kamer seitlich ausgelenkt werden.

### Aufgabe der Erfindung

Der Erfindung liegt daher die Aufgabe zugrunde, die aus dem Stand der Technik bekannten Nachteile zumindest teilweise zu vermeiden und Lösungen bereitzustellen, mit denen es möglich ist, besser und einfacher aus einem Hauptkanal in einen Nebenkanal abzubiegen ohne hierbei die Funktion der Inspektions- und/oder Wartungseinheiten negativ zu beeinflussen.

### Erfindungsgemäße Lösung

Erfindungsgemäß wird diese Aufgabe mit einer Ablenkeinrichtung zum Ablenken eines Arbeitsmittels eines Inspektions- und/oder Wartungssystems sowie mit einem Inspektions- und/oder Wartungssystem nach den unabhängigen Ansprüchen gelöst. Vorteilhafte Weiterbildungen und Ausgestaltungen der Erfindung sind in den jeweiligen abhängigen Ansprüchen angegeben.

Bereitgestellt wird demnach eine Ablenkeinrichtung zum Ablenken eines Arbeitsmittels eines Inspektions- und/oder Wartungssystems, wobei die Ablenkeinrichtung aufweist:
- ein Zugmittel mit einem vorderen Ende und mit einem hinteren Ende,
- eine flexible Befestigungseinrichtung mit einem vorderen Ende und mit einem hinteren Ende,
   wobei
- an dem vorderen Ende der Befestigungseinrichtung das Arbeitsmittel oder ein Arbeitsmittelträger angeordnet ist,
- an dem hinteren Ende der Befestigungseinrichtung ein Befestigungselement angeordnet ist,
- das vordere Ende des Zugmittels mit dem Arbeitsmittel oder mit dem Arbeitsmittelträger gekoppelt ist, und
- das hintere Ende des Zugmittels mit dem Befestigungselement gekoppelt ist, wobei ein Verkürzen des Zugmittels ein Auslenken des vorderen Endes der Befestigungseinrichtung aus einer Neutralstellung bewirkt, und wobei
- das Befestigungselement eine Rotationseinrichtung umfasst,
- das Arbeitsmittel oder der Arbeitsmittelträger um seine Längsachse rotierbar an der Befestigungseinrichtung angeordnet ist und die Rotationseinrichtung um ihre Längsachse rotierbar an der Befestigungseinrichtung angeordnet ist, und
- das Zugmittel ein Zugseil ist.

Damit kann das Arbeitsmittel aus einem Hauptkanal in einen Nebenkanal abgelenkt werden, ohne dass Leit- und/oder Abdrückvorrichtungen vorgesehen werden müssen, die über die Kontur des vorderen Endes des Arbeitsmittels hinausragen. Ferner wird dadurch vermieden, dass die Funktion des Arbeitsmittels durch vorne überstehende Leit- und/oder Abdrückvorrichtungen negativ beeinträchtigt wird. Damit kann das Arbeitsmittel in jede beliebige Richtung abgelenkt werden.

Besonders vorteilhaft ist es, wenn das Arbeitsmittel oder der Arbeitsmittelträger und die Rotationseinrichtung synchron rotierbar sind. Dadurch wird verhindert, dass sich das Zugmittel beim Rotieren des Arbeitsmittels bzw. des Arbeitsmittelträgers um die Befestigungseinrichtung wickelt und die Ablenkeinrichtung so negativ beeinträchtigt oder gar außer Kraft setzt.

Vorteilhaft ist es, wenn das Zugseil zwischen seinem vorderen Ende und seinem hinteren Ende zumindest abschnittsweise ein Formgedächtnismaterial aufweist.

Das Formgedächtnismaterial kann eine Formgedächtnislegierung oder ein Formgedächtnispolymer umfassen.

Vorteilhaft ist es, wenn die das Formgedächtnismaterial aufweisenden Abschnitte des Zugseils in Abhängigkeit von zumindest einer Einflussgröße ihre Länge ändern, vorzugsweise reduzieren.

In einer besonderen Ausgestaltung der Erfindung weist das gesamte Zugseil ein Formgedächtnismaterial auf bzw. ist das gesamte Zugseil auf einem Formgedächtnismaterial gefertigt.

Die Einflussgröße kann die Temperatur des Formgedächtnismaterials sein, wobei die für ein vorbestimmtes Reduzieren der Länge des Zugseils benötigte Temperatur dem Formgedächtnismaterial direkt oder indirekt beaufschlagbar ist.

Zum Beaufschlagung der Temperatur kann ein elektrischer Strom in das Formgedächtnismaterial einspeisbar oder durch das Formgedächtnismaterial leitbar sein.

Zusätzlich oder alternativ kann für das Verkürzen des Zugmittels ein dem Arbeitsmittel oder dem Arbeitsmittelträger und/oder ein der Rotationseinrichtung zugeordneter Elektromotor vorgesehen sein. Im Betrieb kann der Elektromotor das Zugseil beispielsweise an einer Stelle aufwickeln, sodass sich die Länge des Zugseils reduziert.

Die Befestigungseinrichtung kann eine Rückstellkraft aufweisen, die entgegen der Auslenkkraft wirkt. Wird das Zugmittel verlängert, kann die Befestigungseinrichtung von der Ablenkstellung wieder in seine Neutralstellung zurückkehren.

In einer Ausführungsform der Erfindung ist die Befestigungseinrichtung als Stab ausgebildet.

Der Stab kann als flexibler bzw. biegsamer Stab ausgestaltet sein, der nie notwendige Rückstellkraft aufweist. Alternativ oder zusätzlich kann der Stab in einen oder mehreren Abschnitten ein Rückstellelement aufweisen. Dieses Rückstellelement kann als Rückstellfeder ausgestaltet sein.

Das Rückstellelement kann auch ein Formgedächtnismaterial aufweisen, wobei hier vorzugsweise Formgedächtnismaterialen verwendet werden, die ein sogenanntes pseudoelastisches Verhalten (auch "Superelastizität" genannt) aufweisen. Die das Formgedächtnismaterial aufweisenden Abschnitte des Stabes biegen sich, wenn das Zugmittel verkürzt wird, weil durch das Verkürzen des Zugmittels die das Formgedächtnismaterial aufweisenden Abschnitte des Stabes mit einer Spannung beaufschlagt werden. Wird das Zugmittel wieder verlängert dann werden die das Formgedächtnismaterial aufweisenden Abschnitte des Stabes entlastet (d.h. die beaufschlagte Spannung wird reduziert) und das Formgedächtnismaterial kehrt durch seine innere Spannung wieder in seine Ursprungsform, d.h. in die gerade ausgerichtet Form zurück.

Vorteilhaft ist es, wenn das vordere Ende des Zugmittels lösbar an dem Arbeitsmittel oder an dem Arbeitsmittelträger befestigbar ist. Ferner ist es vorteilhaft, wenn das Arbeitsmittel oder der Arbeitsmittelträger lösbar an dem vorderen Ende der Befestigungseinrichtung befestigbar ist. Damit können das Arbeitsmittel und/oder der Arbeitsmittelträger von der Ablenkeinrichtung abgenommen werden und beispielsweise an einem anderen Inspektionssystem ohne Ablenkeinrichtung verwendet werden.

Ferner kann an der Rotationsvorrichtung ein Befestigungsmittel angeordnet sein, um die Ablenkeinrichtung, vorzugsweise lösbar, an dem Inspektions- und/oder Wartungssystems zu befestigen.

In einer Ausgestaltung der Erfindung kann an der Rotationseinrichtung ein Schiebestab angeordnet sein.

In einer vorteilhaften Ausgestaltung der Erfindung umfasst das Arbeitsmittel eine Bildaufnahmeeinrichtung, insbesondere eine Inspektionskamera.

Bereitgestellt wird ferner ein Inspektions- und/oder Wartungssystem, insbesondere Kanalinspektions- und/oder Wartungssystem, mit einer erfindungsgemäßen Ablenkeinrichtung.

An der Ablenkeinrichtung kann ein Arbeitsmittel, insbesondere eine Inspektionskamera, angeordnet sein.

In einer Ausgestaltung der Erfindung kann das Inspektions- und/oder Wartungssystem als Schiebesystem ausgebildet sein.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: eine perspektivische Ansicht einer erfindungsgemäßen Ablenkeinrichtung mit einem daran angeordneten Arbeitsmittel;
- Fig. 2: eine in einem Kanalrohr angeordnete erfindungsgemäße Ablenkeinrichtung mit einem daran angeordneten Arbeitsmittel in einer Neutralstellung;
- Fig. 3: eine in einem Kanalrohr angeordnete erfindungsgemäße Ablenkeinrichtung, die in ein Nebenrohr abgelenkt ist;
- Fig. 4: eine alternative Ausgestaltung einer erfindungsgemäßen Ablenkeinrichtung; und
- Fig. 5: eine perspektivische Ansicht einer erfindungsgemäßen Ablenkeinrichtung, wobei das Zugmittel abschnittsweise ein Formgedächtnismaterial aufweist, und zwei Zugmittel, einmal im Ausgangszustand und einmal im verkürzten Zustand.

### Detaillierte Beschreibung der Erfindung

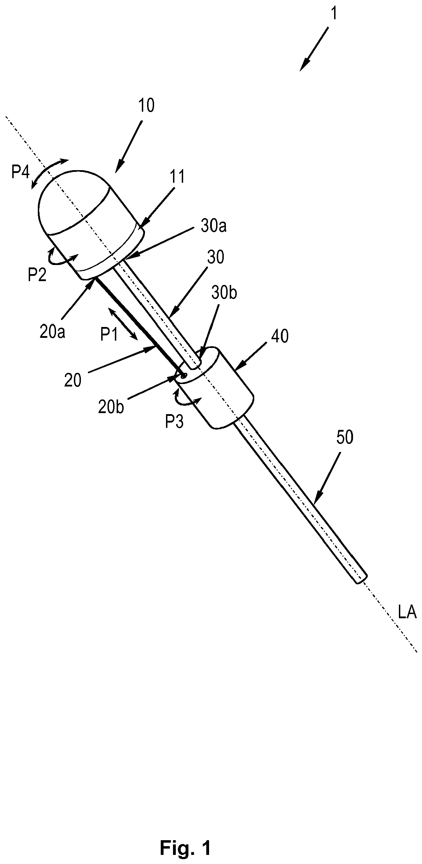

**Fig. 1** zeigt eine erfindungsgemäße Ablenkeinrichtung 1 in einer perspektivischen Ansicht.

An dem vorderen Ende der Ablenkeinrichtung ist ein Arbeitsmittel 10 angeordnet bzw. anordenbar, das hier eine Inspektionskamera ist. Anstelle der Inspektionskamera können aber auch andere Arbeitsmittel, beispielsweise Werkzeuge. Manipulatoren oder dergleichen, angeordnet sein.

Die Ablenkeinrichtung 1 besteht aus einer Befestigungseinrichtung 30, einem Zugmittel 20 und einem Befestigungsmittel 40. An dem vorderen Ende der Befestigungseinrichtung 30 ist ein Arbeitsmittelträger 11 angeordnet. An dem Arbeitsmittelträger 11 ist hier die Inspektionskamera 10 angeordnet. In einer Ausgestaltung der Erfindung kann die Inspektionskamera 10 auch direkt an dem vorderen Ende 30a der Befestigungseinrichtung 30 angeordnet sein.

Das das Befestigungsmittel ist hier als Rotationseinrichtung 40 ausgestaltet.

An dem hinteren Ende 30b der Befestigungseinrichtung 30 ist die Rotationseinrichtung 40 angeordnet. Zwischen der Rotationseinrichtung 40 und dem Arbeitsmittelträger 11 bzw. dem Arbeitsmittel 10 ist das Zugmittel 20 angeordnet, wobei ein vorderes Ende 20a des Zugmittels 20 mit dem Arbeitsmittelträger 11 bzw. mit dem Arbeitsmittel 10 gekoppelt bzw. koppelbar ist und wobei das hintere Ende 20b des Zugmittels 20 mit der Rotationseinrichtung 40 gekoppelt ist.

Die Befestigungseinrichtung 30 ist hier als Stab ausgebildet, der eine bestimmte Rückstellkraft aufweist, um nach einem Abbiegevorgang bzw. Ablenkvorgang die Befestigungseinrichtung wieder in eine Neutralstellung zu bringen. In der Neutralstellung ist die Befestigungseinrichtung 30 vorzugsweise gerade nach vorne ausgerichtet, d.h. verläuft im Wesentlichen koaxial bzw. parallel zur Längsachse LA der Ablenkeinrichtung. Die Rückstellkraft der Befestigungseinrichtung 30 kann beispielsweise durch eine Rückstellfeder bereitgestellt werden, die an der Außenwandung des Stabes 30 angeordnet ist oder die im Inneren des Stabes 30 integriert ist. Alternativ kann die Rückstellkraft von einem Abschnitt des Stabes, der ein Formgedächtnismaterial aufweist, bereitgestellt werden.

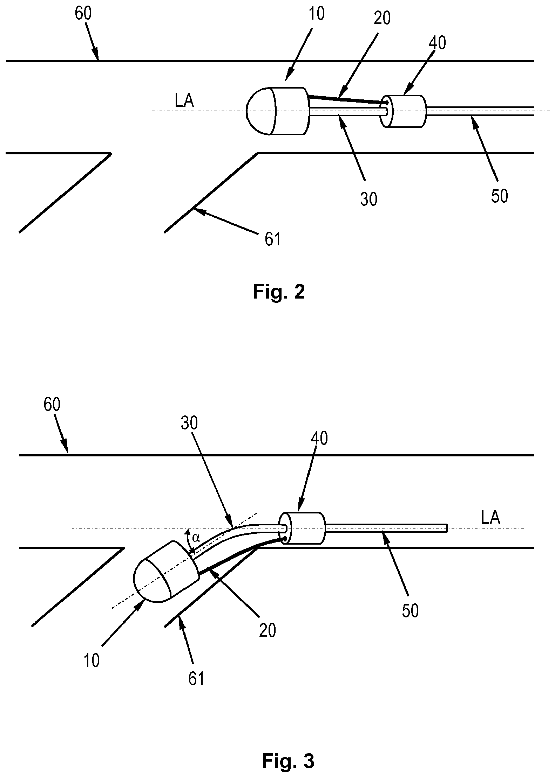

Das Zugmittel 20 verläuft in der Neutralstellung (die in Fig. 1 und Fig. 2 gezeigt ist) der Ablenkeinrichtung 1 außerhalb des Stabes 30 und parallel zum Stab.

Durch Verkürzen des Zugmittels 20 wirkt auf den Arbeitsmittelträger 11 bzw. auf das Arbeitsmittel 10 eine Zugkraft in Richtung der Rotationseinrichtung 40, die das vordere Ende 30a der Befestigungseinrichtung 30 aus seiner Neutralstellung auslenkt und so beispielsweise ein Ablenken des Arbeitsmittels 10 in einen Nebenkanal eines Hauptkanals ermöglicht.

Das Zugmittel 20 kann beispielsweise als Seil ausgebildet sein. Das Verkürzen des Zugmittels 20 kann in einer Ausgestaltung der Erfindung mit Hilfe eines Elektromotors erfolgen, wobei durch Aktivieren des Elektromotors das Zugmittel auf einer Achse aufgewickelt wird. Der Elektromotor kann beispielsweise in der Rotationseinrichtung 40 untergebracht sein. Alternativ kann der Elektromotor auch in dem Arbeitsmittelträger 11 untergebracht sein.

In einer besonders vorteilhaften Ausgestaltung der Erfindung weist das Zugmittel 20 zumindest abschnittsweise ein Formgedächtnismaterial auf, wobei vorzugsweise Formgedächtnislegierungen oder Formgedächtnispolymere verwendet werden. Alternativ kann auch das gesamte Zugmittel 20 mit einem Formgedächtnismaterial hergestellt sein. Bei dieser Ausgestaltung kann auf den Elektromotor zum Verkürzen des Zugmittels verzichtet werden.

Bei der in Fig. 1 gezeigten Ausgestaltung der Erfindung umfasst das Zugmittel 20 einen Formgedächtnisdraht. Eines der beiden Enden 20a, 20b des Zugmittels 20 kann mit einer Steuer- und/oder Regeleinrichtung gekoppelt sein, die angepasst ist, den Formgedächtnisdraht bzw. die ein Formgedächtnismaterial aufweisenden Abschnitte des Zugmittels 20 mit einer physikalischen Größe zu beaufschlagen, die eine Formänderung des Zugmittels bewirkt. Die Formänderung ist vorzugsweise dergestalt, dass sich die Länge des Zugmittels 20 verringert. Aufgrund der Verringerung der Länge des Zugmittels 20 wird das vordere Ende 30a der Befestigungseinrichtung 30 aus seiner Neutralstellung ausgelenkt.

Bei der hier gezeigten Ausgestaltung einer erfindungsgemäßen Ablenkeinrichtung werden für das Zugmittel solche Materialien verwendet, die bei einer Temperaturveränderung, beispielsweise bei einer Temperaturerhöhung, ihre Form bzw. Länge verändern. Als vorteilhaft hat sich herausgestellt, wenn solche Formgedächtnislegierungen oder Formgedächtnispolymere verwendet werden, die den sogenannten Zwei-Weg-Effekt aufweisen, d.h. beim Abkühlen wieder ihre ursprüngliche Form bzw. Länge einnehmen können. Vorteilhafte Formgedächtnislegierungen sind beispielsweise Nickel-Titan, Nickel-Titan-Kupfer, Kupfer-Zink, Kupfer-Zink-Aluminium, Kupfer-Aluminium-Nickel, Eisen-Nickel-Aluminium, Eisen-Mangan oder Zink-Gold-Kupfer.

Die Verwendung eines Formgedächtnismaterials für das Zugmittel bzw. die abschnittsweise Ausgestaltung des Zugmittels als Formgedächtnismaterial hat den Vorteil, dass dadurch sehr hohe Stellkräfte bei sehr geringem Materialeinsatz erreicht werden können. Dadurch können auch Befestigungseinrichtungen ausgelenkt werden, die über sehr hohe Rückstellkräfte verfügen. Sehr hohe Rückstellkräfte sind beispielsweise dann notwendig, wenn schwere Arbeitsmittel an der Ablenkeinrichtung angeordnet werden sollen.

Die zum Verkürzen des Zugmittels bzw. Formgedächtnisdrahtes 20 erforderliche Erwärmung des Formgedächtnismaterials kann beispielsweise über Widerstandselemente, über induktive Erwärmung oder dergleichen bewirkt werden. In einer vorteilhaften Form wird der Formgedächtnisdraht bzw. die ein Formgedächtnismaterial aufweisenden Abschnitte des Zugmittels 20 mit einem elektrischen Strom beaufschlagt, der aufgrund des ohmschen Widerstandes des Formgedächtnismaterials eine entsprechende Erwärmung des Formgedächtnismaterials bewirkt.

In einer vorteilhaften Ausgestaltung der Erfindung sind der Arbeitsmittelträger 11 und/oder das Arbeitsmittel 10 um seine Längsachse LA rotierbar an der Befestigungseinrichtung 30 angeordnet. Durch Rotation des Arbeitsmittels 10 bzw. des Arbeitsmittelträgers 11 kann so die Ablenkrichtung eingestellt werden. Vorzugsweise ist das Arbeitsmittel 10 bzw. der Arbeitsmittelträger 11 um 360° um die Längsachse LA drehbar.

Vorteilhaft ist es zudem, wenn auch die Rotationseinrichtung 40 um ihre Längsachse LA drehbar bzw. rotierbar an der Befestigungseinrichtung 30 angeordnet ist. Hierbei ist es vorgesehen, dass eine Rotation bzw. ein Drehen der Rotationseinrichtung 40 synchron zum Drehen bzw. Rotieren des Arbeitsmittels 10 bzw. des Arbeitsmittelträgers 11 erfolgt. Dadurch wird vermieden, dass sich das Zugmittel 20 bei einer Rotation bzw. bei einem Drehen des Arbeitsmittelträgers 11 bzw. des Arbeitsmittels 10 um die Befestigungseinrichtung 30 aufwickelt, was zu einer Beeinträchtigung der Funktion der Ablenkeinrichtung führen kann. Die Rotationseinrichtung 40 kann hierzu fliegend bzw. schwebend gelagert sein, sodass die Rotationseinrichtung 40 automatisch einer Rotation des Arbeitsmittels 10 bzw. des Arbeitsmittelträgers 11 folgt.

Alternativ kann der Rotationseinrichtung 40 eine Steuereinrichtung zugeordnet sein, die die Rotationseinrichtung 40 in Abhängigkeit eines Rotationswinkels des Arbeitsmittels 10 bzw. des Arbeitsmittelträgers 11 dreht. Vorzugsweise wird durch die Rotationseinrichtung 40 derselbe Drehwinkel in dieselbe Drehrichtung vollzogen, den bzw. die auch das Arbeitsmittel 10 bzw. der Arbeitsmittelträger 11 vollzieht.

Bei der in Fig. 1 gezeigten Ausgestaltung der Erfindung ist das vordere Ende 20a des Zugmittels 20 fest an dem Arbeitsmittelträger 11 bzw. an dem Arbeitsmittel 10 befestigt. Vorteilhaft ist es jedoch, wenn sowohl das Zugmittel 20 als auch die Befestigungseinrichtung 30 lösbar an dem Arbeitsmittelträger 11 bzw. an dem Arbeitsmittel 10 befestigt sind. Dadurch kann das Arbeitsmittel 10 bzw. der Arbeitsmittelträger 11 von der Ablenkeinrichtung abgenommen werden und gegebenenfalls in einem anderen Inspektionssystem - auch ohne Verwendung einer erfindungsgemäßen Ablenkeinrichtung - verwendet werden.

An dem hinteren Ende der Rotationseinrichtung 40 ist hier ein Schiebestab 50 angeordnet, der ein vorderes Ende eines Schiebemittels, etwa ein Schiebeaal, bildet. Es ist lediglich zu gewährleisten, dass die Rotationseinrichtung 40 drehbar an der Befestigungseinrichtung 30 und an dem Schiebestab 50 angeordnet ist.

Anstelle des Schiebestabes 50 kann an dem hinteren Ende der Rotationseinrichtung auch ein Befestigungsmittel vorgesehen sein, mit dem die Ablenkeinrichtung beispielsweise an einem Fahrwagen eines Inspektionssystems befestigt werden kann.

Das in Fig. 1 gezeigte System kann vorteilhafterweise ein Kommunikationsmodul für eine drahtlose Datenübertragung aufweisen, um die für ein Ablenken erforderlichen Steuerdaten zu empfangen und gegebenenfalls die von der Inspektionskamera 10 aufgenommenen Bilder an eine Kontrolleinrichtung außerhalb eines Kanalsystems zu übertragen. Dieses Kommunikationsmodul kann beispielsweise in der Rotationseinrichtung 40, in dem Arbeitsmittelträger 11 oder in dem Arbeitsmittel 10 integriert sein.

**Fig. 2** zeigt eine Ablenkeinrichtung mit einer daran angeordneten Inspektionskamera 10 in einem Hauptrohr 60, von dem ein Nebenrohr 61 abzweigt. Die Inspektionskamera soll aus dem Hauptrohr 60 in das Nebenrohr 61 abzweigen, um auch das Nebenrohr inspizieren zu können.

In Fig. 2 ist die Ablenkeinrichtung in einer Neutralstellung gezeigt, in der die Befestigungseinrichtung 30 gerade nach vorne ausgerichtet ist. Das Arbeitsmittel 10 und die Rotationseinrichtung 40 weisen eine solche Drehstellung auf, bei der das zwischen dem Arbeitsmittel 10 und der Rotationseinrichtung 40 angeordnete Zugmittel 20 oberhalb der Befestigungseinrichtung 30 (d.h. von dem Nebenrohr abgewandt) verläuft.

**Fig. 3** zeigt die in Fig. 2 gezeigte Ablenkeinrichtung, bei der das vordere Ende der Befestigungseinrichtung aus einer Neutralstellung ausgelenkt und in den Seitenkanal 61 eingelenkt ist.

Um aus der in Fig. 2 gezeigten Arbeitsstellung der Ablenkeinrichtung die Inspektionskamera 10 in das Nebenrohr 61 abzulenken, wird zunächst die Inspektionskamera 10 (bzw. der Arbeitsmittelträger 11) um 180° gedreht, sodass sich die Befestigung des Zugmittels an der Inspektionskamera 10 unterhalb des Stabes 30 befindet und damit dem Nebenrohr 61 zugewandt ist. Gleichzeitig wird auch die Rotationseinrichtung 40 in dieselbe Richtung um 180° gedreht, sodass auch das andere Ende des Zugmittels 20 dem Nebenrohr 61 zugewandt ist. In dieser um 180° gedrehten Position des Arbeitsmittels 10 bzw. der Rotationseinrichtung 40 wird die Länge des Zugmittels reduziert, was zur Folge hat, dass das vordere Ende der Befestigungseinrichtung bzw. des Stabes 30 aus seiner Neutralstellung nach unten in das Nebenrohr 61 abgelenkt wird.

Das System kann nunmehr in das Nebenrohr 61 eingeschoben werden. Sobald sich auch die Rotationseinrichtung 40 in dem Nebenrohr 61 befindet, kann das Zugmittel 20 wieder verlängert werden, beispielsweise indem dem Zugmittel keine Temperatur mehr beaufschlagt wird. Die Rückstellkraft des Stabes 30 bewirkt dann, dass der Stab 30 wieder in seine Neutralstellung zurückkehrt.

In Fig. 3 ist die Ablenkeinrichtung mit einem Ablenk- bzw. Auslenkwinkel von etwa 40° aus ihrer Neutralstellung gezeigt. Mit der erfindungsgemäßen Ablenkeinrichtung sind aber auch Auslenkwinkel α von bis 90° und mehr möglich.

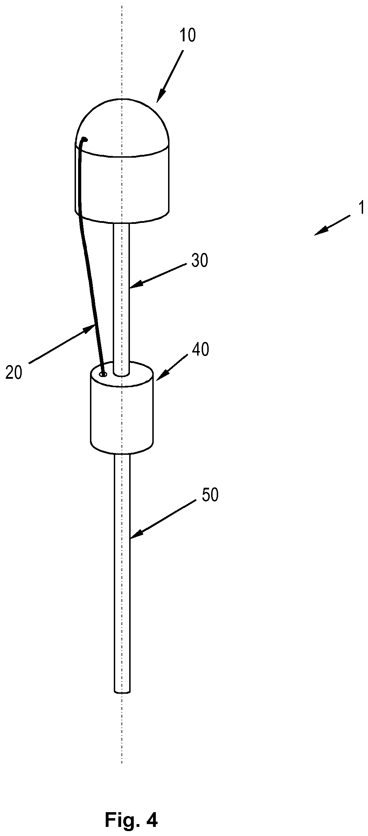

**Fig. 4** zeigt eine weitere Ausgestaltung einer erfindungsgemäßen Ablenkeinrichtung mit einem daran angeordneten Arbeitsmittel 10.

Im Unterschied zu der in Fig. 1 gezeigten Ablenkeinrichtung ist hier das Zugmittel 20 nicht an der Rückseite des Arbeitsmittels 10 bzw. des Arbeitsmittelträgers 11 angeordnet, sondern an einem Ankerpunkt, der sich in einem vorderen Abschnitt der Inspektionskamera 10 befindet. Die Funktionsweise entspricht jedoch der mit Bezug auf Fig. 1 beschriebenen Funktionsweise. Beim Verkürzen des Zugmittels 20 bewirkt die Zugkraft des Zugmittels, dass das vordere Ende der Befestigungseinrichtung bzw. des Stabes 30 aus seiner Neutralstellung ausgelenkt wird und der Stab 30 dadurch in Richtung des Zugmittels gebogen wird. Das Verkürzen des Zugmittels kann hier ebenfalls dadurch erfolgen, indem das Zugmittel 20 bzw. die ein Formgedächtnismaterial aufweisenden Abschnitte des Zugmittels mit einer Temperatur beaufschlagt werden. Die Rückstellkraft des Stabes 30 bewirkt wiederum, dass dieser wieder in seine Neutralstellung zurückkehren kann, wenn das Zugmittel nicht mehr mit einer Temperatur beaufschlagt wird.

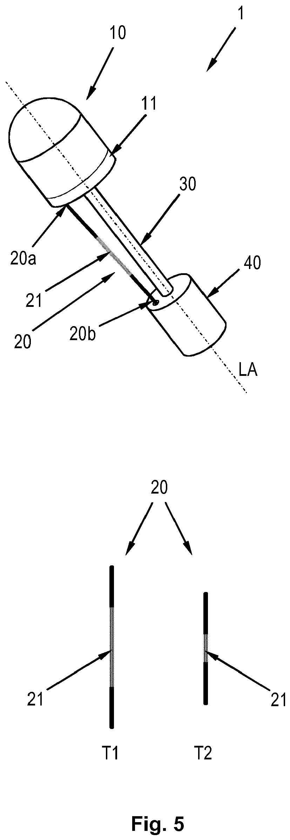

**Fig. 5** zeigt eine perspektivische Ansicht einer erfindungsgemäßen Ablenkeinrichtung 1 (oben), wobei das Zugmittel 20 abschnittsweise (21) ein Formgedächtnismaterial aufweist, und zwei Zugmittel 20 (unten), einmal im Ausgangszustand und einmal im verkürzten Zustand.

Zwischen dem vorderen Ende 20a und dem hinteren Ende 20b des Zugmittels 20 weist das Zugmittel 20 hier einen Abschnitt 21 auf, der ein Formgedächtnismaterial aufweist. Das Zugmittel 20 kann alternativ auch mehrere Abschnitte aufweisen, die ein Formgedächtnismaterial aufweisen. In einer noch weiteren Alternativ kann das gesamt Zugmittel 20 aus einem Formgedächtnismaterial bestehen.

Der das Formgedächtnismaterial aufweisende Abschnitt 21 des Zugmittels 20 wird mit einer Einflussgröße beaufschlagt, die geeignet ist, den Abschnitt 21 zu verkürzen. Vorzugsweise wird das Formgedächtnismaterial mit einer Temperatur beaufschlagt, was etwa dadurch bewerkstelligt werden kann, dass ein elektrischer Strom in das Formgedächtnismaterial eingespeist wird oder durch das Formgedächtnismaterial geleitet wird. Der ohmsche Widerstand des Formgedächtnismaterials bewirkt dann eine entsprechende Erwärmung des Formgedächtnismaterials.

Durch das Erwärmen des Formgedächtnismaterials in dem Abschnitt 21 des Zugmittels 20 wird der Abschnitt 21 verkürzt, was zu einer entsprechenden Verkürzung des gesamten Zugmittels 20 führt. Dadurch wird der Stab 30 aus seiner Neutralstellung in eine gebogene Stellung gebracht.

Nach dem Abkühlen des Formgedächtnismaterials verlängert sich der Abschnitt 21 des Zugmittels 20 wieder, welches dadurch in seine ursprüngliche Länge zurücckehrt. Die Rückstellkraft des Stabes 30 bewirkt dann, dass dieser wieder in seine Neutralstellung zurückkehrt.

Die beiden unteren Abbildungen in Fig. 5 zeigen Zugmittel 20, einmal in einem Ausgangszustand (links) und einmal in einem verkürzten Zustand (rechts).

In dem Ausgangszustand wird das Formgedächtnismaterial mit einer Temperatur T1 beaufschlagt, etwa der Umgebungstemperatur in einem Kanalrohr. Hierzu muss kein elektrischer Strom dem Formgedächtnismaterial zugeführt werden. Der Abschnitt 21 weist im Ausgangszustand eine Länge auf, bei der der Stab 30 sich in der Neutralstellung befindet.

Um zum verkürzten Zustand zu gelangen, wird das Formgedächtnismaterial mit einer Temperatur T2 beaufschlagt, die höher ist als die Temperatur T1, beispielwiese zwischen 80°c und 120°C. Die Temperatur T2 hängt im Wesentlich von der verwendeten Legierung des Formgedächtnismaterials ab. Im verkürzten Zustand wird der Stab 30 aus seiner Neutralstellung ausgelenkt, wie beispielsweise in Fig. 3 gezeigt.

### Bezugszeichen:

- 1: Ablenkeinrichtung
- 10: Arbeitsmittel (z.B. Inspektionskamera oder Werkzeug)
- 11: Arbeitsmittelträger
- 20: Zugmittel (z.B. Seil)
- 20a: vorderes Ende des Zugmittels 20
- 20b: hinteres Ende des Zugmittels 20
- 21: Abschnitt des Zugmittels 20, der ein Formgedächtnismaterial aufweist
- 30: flexible Befestigungseinrichtung mit Rückstellkraft (z.B. Stab mit Rückstellfeder und/oder mit einem Formgedächtnismaterial)
- 30a: vorderes Ende der Befestigungseinrichtung 30
- 30b: hinteres Ende der Befestigungseinrichtung 30
- 40: Befestigungselement, z.B. Rotationseinrichtung
- 50: Schiebestab bzw. Befestigungsmittel
- 60: Kanalrohr (Hauptrohr)
- 61: Kanalrohr (Nebenrohr)
- α: Ablenkwinkel
- LA: Längsachse der Ablenkeinrichtung
- P1: Pfeil (Zugrichtung des Zugmittels 20)
- P2: Pfeil (Rotationsrichtung des Arbeitsmittels 10)
- P3: Pfeil (Rotationsrichtung der Rotationseinrichtung 40)
- P4: Pfeil (Ablenkrichtung des Arbeitsmittels 10)

## Patentansprüche

1. Ablenkeinrichtung (1) zum Ablenken eines Arbeitsmittels (10) eines Inspektions- und/oder Wartungssystems, wobei die Ablenkeinrichtung aufweist:
- ein Zugmittel (20) mit einem vorderen Ende (20a) und mit einem hinteren Ende (20b),
- eine flexible Befestigungseinrichtung (30) mit einem vorderen Ende (30a) und mit einem hinteren Ende (30b),
wobei
- an dem vorderen Ende (30a) der Befestigungseinrichtung (30) das Arbeitsmittel (10) oder ein Arbeitsmittelträger (11) angeordnet ist,
- an dem hinteren Ende (30b) der Befestigungseinrichtung (30) ein Befestigungselement (40) angeordnet ist,
- das vordere Ende (20a) des Zugmittels (20) mit dem Arbeitsmittel (10) oder mit dem Arbeitsmittelträger (11) gekoppelt ist, und
- das hintere Ende (20b) des Zugmittels (20) mit dem Befestigungselement (40) gekoppelt ist,
wobei ein Verkürzen des Zugmittels (20) ein Auslenken des vorderen Endes (30a) der Befestigungseinrichtung (30) aus einer Neutralstellung bewirkt, wobei
- das Befestigungselement eine Rotationseinrichtung (40) umfasst, und
- das Arbeitsmittel (10) oder der Arbeitsmittelträger (11) um seine Längsachse (LA) rotierbar an der Befestigungseinrichtung (30) angeordnet ist und die Rotationseinrichtung (40) um ihre Längsachse (LA) rotierbar an der Befestigungseinrichtung (30) angeordnet ist,
**dadurch gekennzeichnet, dass**
das Zugmittel (20) ein Zugseil ist.

2. Ablenkeinrichtung nach dem vorhergehenden Anspruch, wobei das Arbeitsmittel (10) oder der Arbeitsmittelträger (11) und die Rotationseinrichtung (40) synchron rotierbar sind.

3. Ablenkeinrichtung nach einem der vorhergehenden Ansprüche, wobei das Zugseil (20) zwischen dem vorderen Ende (20a) und dem hinteren Ende (20b) zumindest abschnittsweise (21) ein Formgedächtnismaterial, vorzugsweise eine Formgedächtnislegierung oder ein Formgedächtnispolymer, aufweist und wobei die das Formgedächtnismaterial aufweisenden Abschnitte (21) des Zugseils (20) in Abhängigkeit von zumindest einer Einflussgröße ihre Länge ändern, vorzugsweise reduzieren.

4. Ablenkeinrichtung nach dem vorhergehenden Anspruch, wobei die Einflussgröße die Temperatur des Formgedächtnismaterials ist und wobei die für ein vorbestimmtes Reduzieren der Länge des Zugseils (20) benötigte Temperatur dem Formgedächtnismaterial direkt oder indirekt beaufschlagbar ist.

5. Ablenkeinrichtung nach dem vorhergehenden Anspruch, wobei zur Beaufschlagung der Temperatur ein elektrischer Strom in das Formgedächtnismaterial einspeisbar oder durch das Formgedächtnismaterial leitbar ist.

6. Ablenkeinrichtung nach einem der vorhergehenden Ansprüche, wobei für das Verkürzen des Zugmittels (20) ein dem Arbeitsmittel (10) oder dem Arbeitsmittelträger (11) und/oder der Rotationseinrichtung (40) zugeordneter Elektromotor vorgesehen ist.

7. Ablenkeinrichtung nach einem der vorhergehenden Ansprüche, wobei die Befestigungseinrichtung (30) eine Rückstellkraft aufweist, die entgegen der Auslenkkraft des Zugmittels (20) wirkt.

8. Ablenkeinrichtung nach einem der vorhergehenden Ansprüche, wobei die Befestigungseinrichtung (30) als Stab ausgebildet ist.

9. Ablenkeinrichtung nach einem der vorhergehenden Ansprüche, wobei das Arbeitsmittel (10) eine Bildaufnahmeeinrichtung, insbesondere eine Inspektionskamera umfasst.

10. Kanalinspektions- und/oder Wartungssystem, aufweisend eine Ablenkeinrichtung nach einem der vorhergehenden Ansprüche.

11. Kanalinspektions- und/oder Wartungssystem nach dem vorhergehenden Anspruch, wobei dieses als Schiebesystem ausgebildet ist.

## Claims

1. Deflection device (1) for deflecting a working means (10) of an inspection and/or maintenance system, the deflection device comprising:
- a tension means (20) having a front end (20a) and a rear end (20b),
- a flexible fastening device (30) having a front end (30a) and a rear end (30b),
- the working means (10) or a working means carrier (11) being arranged at the front end (30a) of the fastening device (30),
- a fastening element (40) being arranged at the rear end (30b) of the fastening device (30),
- the front end (20a) of the tension means (20) being coupled to the working means (10) or to the working means carrier (11), and
- the rear end (20b) of the tension means (20) being coupled to the fastening element (40),
the front end (30a) of the fastening device (30) diverting from a neutral position when the tension means (20) is shortened,
- the fastening element comprising a rotation device (40), and
- the working means (10) or the working means carrier (11) being arranged so as to be rotatable about its longitudinal axis (LA) on the fastening device (30) and the rotation device (40) being arranged so as to be rotatable about its longitudinal axis (LA) on the fastening device (30),
**characterized in that**
the tension means (20) is a tension cord.

2. Deflection device according to the preceding claim, wherein the working means (10) or the working means carrier (11) and the rotation device (40) can be rotated synchronously.

3. Deflection device according to either of the preceding claims, wherein the tension cord (20) has a shape memory material between the front end (20a) and the rear end (20b), at least in portions (21), preferably a shape memory alloy or a shape memory polymer, and wherein the portions (21) of the tension cord (20) having the shape memory material change, preferably reduce, their length on the basis of at least one influencing variable.

4. Deflection device according to the preceding claim, wherein the influencing variable is the temperature of the shape memory material and wherein the temperature required for a predetermined reduction in the length of the tension cord (20) can be applied directly or indirectly to the shape memory material.

5. Deflection device according to the preceding claim, wherein an electric current can be fed into the shape memory material or can be conducted through the shape memory material in order to apply the temperature.

6. Deflection device according to any of the preceding claims, wherein an electric motor assigned to the working means (10) or the working means carrier (11) and/or to the rotation device (40) is provided for shortening the tension means (20).

7. Deflection device according to any of the preceding claims, wherein the fastening device (30) has a restoring force which acts counter to the diverting force of the tension means (20).

8. Deflection device according to any of the preceding claims, wherein the fastening device (30) is designed as a rod.

9. Deflection device according to any of the preceding claims, wherein the working means (10) comprises an image recording device, in particular an inspection camera.

10. Sewer inspection and/or maintenance system comprising a deflection device according to any of the preceding claims.

11. Sewer inspection and/or maintenance system according to the preceding claim, wherein said system is designed as a sliding system.

## Revendications

1. Dispositif de déviation (1) destiné à dévier un outil de travail (10) d'un système d'inspection et/ou de maintenance, le dispositif de déviation présentant :
- un moyen de traction (20) comportant une extrémité avant (20a) et une extrémité arrière (20b),
- un dispositif de fixation flexible (30) comportant une extrémité avant (30a) et une extrémité arrière (30b),
dans lequel
- l'outil de travail (10) ou un support d'outil de travail (11) est disposé à l'extrémité avant (30a) du dispositif de fixation (30),
- un élément de fixation (40) est disposé à l'extrémité arrière (30b) du dispositif de fixation (30),
- l'extrémité avant (20a) du moyen de traction (20) est accouplée à l'outil de travail (10) ou au support d'outil de travail (11), et
- l'extrémité arrière (20b) du moyen de traction (20) est accouplée à l'élément de fixation (40),
un raccourcissement du moyen de traction (20) provoquant une sortie de l'extrémité avant (30a) du dispositif de fixation (30) à partir d'une position neutre,
dans lequel
- l'élément de fixation comprend un dispositif de rotation (40), et
- l'outil de travail (10) ou le support d'outil de travail (11) est disposé en rotation autour de son axe longitudinal (LA) sur le dispositif de fixation (30) et le dispositif de rotation (40) est disposé en rotation autour de son axe longitudinal (LA) sur le dispositif de fixation (30),
**caractérisé en ce que**
le moyen de traction (20) est un câble de traction.

2. Dispositif de déviation selon la revendication précédente, dans lequel l'outil de travail (10) ou le support d'outil de travail (11) et le dispositif de rotation (40) peuvent être tournés de manière synchrone.

3. Dispositif de déviation selon l'une des revendications précédentes, dans lequel le câble de traction (20) présente un matériau à mémoire de forme au moins par sections (21), de préférence un alliage à mémoire de forme ou un polymère à mémoire de forme, entre l'extrémité avant (20a) et l'extrémité arrière (20b), les sections (21) du câble de traction (20) présentant le matériau à mémoire de forme modifiant, de préférence réduisant, leur longueur en fonction d'au moins une variable d'influence.

4. Dispositif de déviation selon la revendication précédente, dans lequel la variable d'influence est la température du matériau à mémoire de forme et dans lequel la température requise pour une réduction prédéterminée de la longueur du câble de traction (20) peut être appliquée directement ou indirectement au matériau à mémoire de forme.

5. Dispositif de déviation selon la revendication précédente, dans lequel un courant électrique peut être introduit dans le matériau à mémoire de forme ou peut être conduit à travers le matériau à mémoire de forme afin d'appliquer la température.

6. Dispositif de déviation selon l'une des revendications précédentes, dans lequel un moteur électrique affecté à l'outil de travail (10) ou au support d'outil de travail (11) et/ou au dispositif de rotation (40) est prévu pour raccourcir le moyen de traction (20).

7. Dispositif de déviation selon l'une des revendications précédentes, dans lequel le dispositif de fixation (30) présente une force de rappel qui agit contre la force de sortie du moyen de traction (20).

8. Dispositif de déviation selon l'une des revendications précédentes, dans lequel le dispositif de fixation (30) est conçu comme une tige.

9. Dispositif de déviation selon l'une des revendications précédentes, dans lequel l'outil de travail (10) comprend un dispositif d'enregistrement d'images, notamment une caméra d'inspection.

10. Système d'inspection et/ou de maintenance d'égouts, présentant un dispositif de déviation selon l'une des revendications précédentes.

11. Système d'inspection et/ou de maintenance d'égouts selon la revendication précédente, ce système étant conçu comme un système coulissant.
